(19) Europäisches Patentamt
European Patent Office
Office européen des brevets

(11) Publication number: **0 087 165**
**B1**

(12) **EUROPEAN PATENT SPECIFICATION**

(45) Date of publication of patent specification: **30.07.86**

(51) Int. Cl.[4]: **C 08 F 212/08**

(21) Application number: **83101711.6**

(22) Date of filing: **22.02.83**

(54) **Production of copolymers of alpha-methylstyrene.**

(30) Priority: **22.02.82 US 350773**

(43) Date of publication of application:
**31.08.83 Bulletin 83/35**

(45) Publication of the grant of the patent:
**30.07.86 Bulletin 86/31**

(84) Designated Contracting States:
**BE DE FR GB IT NL SE**

(56) References cited:
**US-A-3 035 033**
**US-A-3 725 506**

**The file contains technical information submitted after the application was filed and not included in this specification**

(73) Proprietor: **THE DOW CHEMICAL COMPANY**
**2030 Dow Center Abbott Road P.O. Box 1967**
**Midland, MI 48640 (US)**

(72) Inventor: **Priddy, Duane Bruce**
**1212 Vance Road**
**Midland Michigan 48640 (US)**

(74) Representative: **Hann, Michael, Dr. et al**
**Patentanwälte Dr. Michael Hann Dr. H.-G. Sternagel Sander Aue 30**
**D-5060 Bergisch Gladbach 2 (DE)**

**EP 0 087 165 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Copolymerized α-methylstyrene/styrene resinous products and analogous copolymerizates of alkenyl aromatic monomer mixtures containing copolymerized α-methylalkenyl aromatic moieties are notoriously difficult to prepare, especially homogeneous products. As disclosed in U.S. Patent No. 3,725,506, homogeneous α-methylstyrene/styrene analogous copolymers generally provide for fabrication purposes improved heat stability characteristics.

Such copolymers have been prepared using conventional batch or continuous plug flow processing techniques usually at polymerization temperatures of 60°C or lower. These procedures, however, have required feeding α-methylstyrene/styrene mixtures in relatively high respective proportional ratios.

Nothing in prior art concerns a way to produce extraordinarily homogenous copolymerizates of α-methylstyrene and styrene by anionic polymerization in solution using closely controlled, low α-methylstyrene/styrene ratio monomer mixture input feed and intensive-mixing, recirculatory reactor units.

The present invention involves feeding a mixture of alkenylaromatic monomers to an anionically-catalyzed reaction mass, most advantageously as a solution polymerization system, using an intensively and backmixed, continuous-mode accommodating recirculating coil or backmixed continuous stirred tank reactor wherein the reaction mass is maintained in an essentially uniform homogeneous condition until the copolymer product is ready for withdrawal from the reactor unit and subsequent finishing and solid copolymer product recovery operations.

More specifically, the process for preparing an improved copolymer of α-methylstyrene containing 10 to 50 weight percent based on copolymer of at least one monomer of Formula IA:

$$CH_2{=}\overset{\overset{\large CH_3}{|}}{C}Ar, \qquad (IA)$$

with the balance of the copolymer comprising units of at least one other monomer of Formula IB:

$$CH_2{=}CHAr, \qquad (IB)$$

where Ar in both formula (IA) and (IB) is an aromatic group of from 6 to 10 carbon atoms comprising

(A) using an intensively and backmixed, continuous-mode-accommodating, recirculating reactor assembly having therein a reaction zone adapted for anionic polymerization of styrene at 70—120°C and capable of keeping a reaction mass thoroughly mixed and transferred omnidirectionally between upper and lower extremities of the reaction zone;

(B) employing an effective amount of an organometallic anionic catalyst soluble in styrene for initiating the copolymerization;

(C) charging to the reaction zone a mixture of Formulae IA and IB monomers components in a weight ratio being in the range of 0.1 to 2.0, said monomer mixture being charged as a solution in a solvent for the monomer mixture with a monomer mixture:solvent ratio on a parts by weight basis of 1:8 to 8:1, respectively;

(D) keeping the reaction mass in the reaction zone in a generally homogeneous condition;

(E) maintaining the concentration of unreacted Formula (IB) monomer in the reaction mass in the reaction zone at a level not more than 10 weight percent of the Formula IB monomer added to said mass;

(F) holding the concentration of completed copolymer in the reaction mass in the reaction zone in the range of 30 to 70 weight percent; and

(G) withdrawing a copolymer product solution as effluent from the reactor and recovering a homogeneous, heat stable copolymer product.

Very homogeneous α-methylstyrene alkenylaromatic copolymer products are thus produced having very good heat stability with reliable and consistently reproducible results obtained in practice with conventional apparatus and handling techniques.

Figure 1 of the accompanying Drawing demonstrates as a general comparison the substantially higher α-methylstyrene/styrene monomer ratio involved in the feed stream input of prior batch or continuous plug flow processes run above 70°C to obtain a given α-methylstyrene/styrene copolymer composition product in comparison with the lower monomer mixture ratio used when the copolymerization is anionically initiated in a continuous stirred tank reactor ("CSTR").

The copolymer products produced with excellent homogeneity by practice of the present invention are alkenyl aromatic copolymers containing in copolymerized form 10 to 50 weight percent (based on copolymer) of an α-methylalkenylaromatic monomer of Formula IA:

$$CH_2{=}\overset{\overset{\large CH_3}{|}}{C}Ar, \qquad (IA)$$

with the balance of the copolymer being a copolymerized monomer of Formula IB:

$$CH_2{=}CHAr, \qquad (IB)$$

wherein Ar is a 6 to 10 carbon aromatic group.

Advantageously, α-methylstyrene is the Formula IA monomer that is utilized although it is sometimes of considerable benefit to utilize ring-substituted α-methylstyrenes such as paraisopropenyltoluene. It is frequently preferable to utilize styrene as the Formula IB monomer to be copolymerized although other species of Formula IB monomers may also be suitably employed such as vinyltoluene, the dimethylstyrenes, t-butyl-styrene, and vinylnaphthalene. Various mixtures of Formula IA monomers of Formula IB monomers, or both especially including α-methylstyrene or styrene may be copolymerized to provide the advantageous homogeneous copolymer products.

It is frequently more desirable to prepare copolymer products having 10 to 40 weight percent of Formula IA monomer copolymerized therein.

The polymerization initiators utilized in the polymerization process are best when soluble in the reaction mass undergoing copolymerization. They are well known organometallic anionic initiators including n-butyllithium; sec-butyllithium; and/or equivalent catalysts, used in conventional effective amounts as disclosed in U.S. Patents 3,322,734, 3,404,134, 4,172,100, 4,172,190, 4,182,818, 4,196,153, 4,196,154, 4,200,718, 4,201,729, and 4,205,016. n-Butyllithium is usually a convenient and satisfactory anionic initiator for purposes of present practice.

It is not possible in practice of the present invention to produce the homogeneous copolymer products by "mass" or "bulk" polymerization techniques wherein the monomer or incompletely-polymerized monomer constituents provide the fluid vehicle for the reaction mass. However, it is generally more advantageous and desirable to utilize solution polymerization techniques. In such cases, the solvent is fed along with the monomer mixture to the reaction mass in the polymerization apparatus employed in appropriate proportions.

For solution polymerization ethylbenzene is a very good solvent for monomer mixture dilution. Many others can also be utilized in conventional amounts normally employed for the anionic polymerization of styrene. Besides prerequisite dissolving power, the solvent employed must not interfere with function of the anionic initiator. Thus, the solvent should not have deleterious proportions of interfering components such as oxygen containing or active-hydrogen constituents. Boiling point is also significant in solvent selection. Fluids too volatile may require overly-expensive and undesirable pressure-handling capability of the process equipment. On the other hand, "high boilers" tend to cause removal problems in product recovery. Thus, benzene, toluene, xylene and cumene or mixtures thereof are suitable alternatives to ethylbenzene. Also excess monomers of Formula IA can be used as solvents in polymerization as the polymerization is conducted at temperatures above the ceiling temperatures of these monomers.

The quantity of solvent relative to the monomer mixture being fed and/or present in the reaction mass is often advantageously about an equal amount on a weight basis. However, this can often be acceptably varied from a 2:3 to 3:2 monomer mixture:solvent weight ratio; and even 1:8 to 8:1 parts by weight monomer:solvent ratios may be tolerable.

Recirculating coil and equivalent reactors of the type similar to those described in U.S. Patents, 3,035,033 and 3,838,139 are generally suitable for use in the process of the present invention. It is of utmost desirability for the apparatus to thoroughly mix together all parts and segmental portions of the reaction mass mixture present in the reaction zone; this being usually accomplished by means of stirrers or agitators capable of readily and efficiently and effectively transferring the reaction mass both from the upper to the lower part of the involved reaction zone in the equipment, and *vice versa*.

Normal operating temperatures of 70°—120°C with reaction zone residence times in the reactor usually being not more than about 3 hours can be utilized in the practice of the present invention.

In practice there are three factors of crucial and critical importance to secure desired results in the present invention. These are:

(1) the weight ratio of Formula IA monomer to Formula IB monomer in the feed stream being charged into the reaction zone should be in the range of 0.1 to 2.0;

(2) the concentration of Formula IB monomer in the reaction mass undergoing copolymerization should be maintained at a level of not more than 10 weight percent of the Formula IB monomer added to said mass; and

(3) the concentration of completed copolymer in the reaction mass should be kept in the range of 30 to 70 weight percent.

One of the practical consequences of the factor (1) above employing a lower boiling solvent is that it minimizes the amount of less volatile residual Formula IA monomer in the copolymerized reaction mass, therefore, making easier the finishing operations, particularly the important devolatilization step.

By way of emphasis, another essential for good results from practice of the invention is the keeping of the reaction mass mixture in a thoroughly homogeneous condition throughout the anionic copolymerization.

Polymerization in accordance with the present invention can be optimized to provide maximum

amount of polymer per unit of reactor, or, if desired, to provide the maximum quality of polymer per unit of reactor.

If crystal clarity and minimum yellowness is desired, polymerization should be conducted using a minimum amount of lithium initiator. For maximum amount of polymer, greater quantities of the lithium initiator are used. One can obtain a polymer of desired molecular weight distribution using smaller amounts of lithium by incorporating a chain transfer agent. Very convenient chain transfer agents are methylbenzenes such as toluene, all of the xylene isomers, hemimellitene, pseudocumene, mesitylene, and methylethylbenzene. Desirably, the boiling point of such chain transfer agent is below 200°C and preferably below about 165°C.

Figure 2 graphically depicts the relationship between the yellowness index as determined by the ASTM Test D1925 and the lithium content of polymer. If prime color-free polymer is desired, low initiator level with chain transfer agent provides optimum product. If maximum reactor efficiency is required without regard to the color of the polymer, higher levels of lithium initiator can be employed. For maximum quantity in a color sense, conversion of monomer to polymer as low as 90 percent may be utilized, whereas if some color can be tolerated in the polymer, conversions in excess of 99 percent are possible.

A recirculating coil reactor unit similar to that shown in U.S. Patent No. 3,035,033 was utilized for the making of three separate Runs to prepare copolymeric product for demonstration of the present invention. The reactor was a loop of 2.5 cm (1 inch) inside diameter stainless steel tubing having a Northern Gear pump number 4448 operating at 200 revolutions per minute to provide recirculation within the loop. The internal volume of the reactor was 900 milliliters. The tubing of the reactor was wrapped with 0.64 cm (1/4-inch) copper tubing and steam heated. Feed and initiator were pumped into the gear pump. The initiator was n-butyllithium and was handled as a 1.5 weight percent solution in ethylbenzene. The rate of initiator addition was controlled to provide a constant color in the reaction mixture. In each of the Runs, monomer mixtures, solvent and n-butyllithium initiator were fed into the reactor at a rate such that a 1.5 hour residence time was had. The effluent from the reactor was continuously devolatilized to obtain the product copolymer resin in each Run. Operational and materials parameters and the results obtained are set forth in the following tabulation.

| Run Number: | 1 | 2 | 3 |
|---|---|---|---|
| Feed composition by gas chromatographic analysis: | | | |
| Weight % α-methylstyrene | 28 | 10 | 18 |
| Weight % styrene | 41 | 42 | 33 |
| Weight % ethylbenzene | 31 | 48 | 49 |
| Copolymer composition by calculation: | | | |
| Weight % α-methylstyrene | 32 | 14 | 22 |
| Weight % styrene | 68 | 86 | 78 |
| Volatile composition by gas chromatograph: | | | |
| Weight % α-methylstyrene | 21 | 6 | 17 |
| Weight % styrene | 0.3 | 0.3 | 0.5 |
| Weight % ethylbenzene | 78 | 93 | 82 |
| Wt. % Solids in reaction mass | 60 | 49 | 42 |
| Polymerization temperature, °C | 102 | 88 | 75 |
| n-Butyllithium used in parts per million by weight of monomer | 260 | 240 | 130 |
| Weight average molecular weight of product (by gel permeation chromatography) | 287,000 | 168,000 | 345,000 |

Each of the α-methylstyrene/styrene copolymer products had very good thermal stability characteristics during molding operations and heat exposures testings.

**Claims**

1. Method of preparing homogeneous, heat stable thermoplastic resinous copolymers of α-methylstyrene containing 10 to 50 percent by weight based on copolymer of at least one monomer of Formula IA:

$$CH_2{=}\overset{\overset{\displaystyle CH_3}{|}}{C}Ar, \qquad (IA)$$

with the balance of the copolymer comprising units of at least one other monomer of Formula IB:

$$CH_2{=}CHAr, \qquad (IB)$$

wherein Ar in both formula (IA) and (IB) is an aromatic group of from 6 to 10 carbon atoms comprising

(A) using an intensively and backmixed continuous-mode-accommodating, recirculating reactor assembly having therein a reaction zone adapted for anionic polymerization of styrene at 70° to 120°C and capable of keeping a reaction mass thoroughly mixed and transferred omnidirectionally between upper and lower extremities of the reaction zone;

(B) employing an effective amount of an organometallic anionic catalyst soluble in styrene for initiating the copolymerization;

(C) charging to the reaction zone a mixture of Formula IA and IB monomers components in a weight ratio being in the range of 0.1 to 2.0, said monomer mixture being charged as a solution in a solvent for the monomer mixture with a monomer mixture:solvent ratio on a parts by weight basis of 1:8 to 8:1, respectively;

(D) keeping the reaction mass in the reaction zone in a generally homogeneous condition;

(E) maintaining the concentration of unreacted Formula IB monomer in the reaction mass in the reaction zone at a level not more than 10 weight percent of the Formula IB monomer added to said mass;

(F) holding the concentration of completed copolymer in the reaction mass in the reaction zone in the range of 30 to 70 weight percent; and

(G) withdrawing a copolymer product solution as effluent from the reactor and recovering a homogeneous heat stable copolymer product.

2. The method of Claim 1 wherein the monomeric mixture is charged into the reactor to provide a copolymer product containing 10 to 40 percent by weight of at least one Formula IA monomer copolymerized therein.

3. The method of Claim 1 wherein the Formula IA monomer is α-methylstyrene.

4. The method of Claim 1 wherein the Formula IB monomer is styrene.

5. The method of Claim 1 wherein the Formula IB monomer is p-isopropenyltoluene.

6. The method of Claim 1 wherein the monomers are α-methylstyrene and styrene.

7. The method of Claim 1 wherein the initiator is n-butyllithium.

8. The method of Claim 6 wherein ethylbenzene is employed as solvent.

9. The method of Claim 6 wherein xylene, and mesitylene and mixtures thereof are employed as solvent.

10. The method of Claim 1 wherein an excess of the Formula IA monomer is used as the solvent.

**Patentansprüche**

1. Verfahren zum Herstellen von homogenen, wärmestabilen thermoplastischen Copolymerharzen von α-Methylstyrol, enthaltend 10 bis 50 Gew.-%, bezogen auf Copolymer mindestens eines Monomeren der Formel IA:

$$CH_2{=}C(CH_3)Ar, \qquad IA$$

und dem verbleibenden Rest des Copolymeren aus mindestens einem anderen Monomeren der Formel IB:

$$CH_2{=}CHAr, \qquad IB$$

wobei AR in beiden Formeln (IA) und (IB) eine aromatische Gruppe mit 6 bis 10 Kohlenstoffatomen ist, durch

(A) Verwendung einer intensiv und die Rückmischung kontinuierlich anpassenden Umlaufreaktoreinrichtung mit einer Reaktionszone für die anionische Polymerisation von Styrol bei 70 bis 120°C, in der eine durch Mischung der Reaktionsmasse und eine ungerichtete Übertragung zwischen oberen und unteren Enden der Reaktionszone möglich ist,

(B) Anwendung einer wirksamen Menge eines organometallischen anionischen, in Styrol löslichen Katalysators zum Auslösen der Copolymerisation,

(C) Einbringen einer Mischung der Monomerkomponenten der Formeln IA und IB in die Reaktionszone mit einem Gewichtsverhältnis im Bereich von 0,1 bis 2,0, wobei die Monomermischung als Lösung in einem Lösungsmittel für die Monomermischung zugeführt wird mit einem Mischungsverhältnis von Gewichtsteilen Monomer:Lösungsmittel von 1:8 bis 8:1,

(D) Halten der Reaktionsmasse in der Reaktionszone unter im allgemeinen gleichmäßigen Bedingungen,

(E) Aufrechterhalten der Konzentration von nicht umgesetztem Monomer der Formel IB in der

Reaktionsmasse innerhalb der Reaktionszone auf einem Niveau von nicht mehr als 10 Gew.-% des der Masse zugesetzten Monomer der Formel IB,

(F) Halten der Konzentration des fertigen Copolymers in der Reaktionsmasse innerhalb der Reaktionszone im Bereich von 30 bis 70 Gew.-% und

(G) Abziehen der Copolymer-Lösung als Reaktorabgang und Gewinnen eines homogenen, wärmestabilen Copolymerproduktes.

2. Verfahren nach Anspruch 1, dadurch gekennzeichnet, daß die Monomermischung dem Reaktor so zugeführt wird, daß ein Copolymerprodukt erhalten wird, das 10 bis 40 Gew.-% des mindestens eines Monomeren der Formal IA copolymerisiert enthält.

3. Verfahren nach Anspruch 1, dadurch gekennzeichnet, daß das Monomer der Formel IA α-Methylstyrol ist.

4. Verfahren nach Anspruch 1, dadurch gekennzeichnet, daß das Monomer der Formel IB Styrol ist.

5. Verfahren nach Anspruch 1, dadurch gekennzeichnet, daß das Monomer der Formel IB p-Isopropenyltoluol ist.

6. Verfahren nach Anspruch 1, dadurch gekennzeichnet, daß die Monomeren α-Methylstyrol und Styrol sind.

7. Verfahren nach Anspruch 1, dadurch gekennzeichnet, daß der Starter n-Butyllithium ist.

8. Verfahren nach Anspruch 6, dadurch gekennzeichnet, daß das eingesetzte Lösungsmittel Ethylbenzol ist.

9. Verfahren nach Anspruch 6, dadurch gekennzeichnet, daß die eingesetzten Lösungsmittel Xylol und Mesitylen und Mischungen derselben sind.

10. Verfahren nach Anspruch 1, dadurch gekennzeichnet, daß ein Überschuß des Monomeren der Formel IA als Lösungsmittel verwendet wird.

**Revendications**

1. Procédé pour la préparation de copolymères résineux d'α-méthylstyrène thermoplastiques, résistant à la chaleur, contenant de 10 à 50% en poids, par rapport au copolymère, d'au moins un monomère de formule IA:

$$CH_2{=}C(CH_3)Ar, \qquad (IA)$$

le reste du copolymère étant constitué de motifs d'au moins un autre monomère de formule IB:

$$CH_2{=}CHAr, \qquad (IB)$$

Ar étant, dans les deux formules (IA) et (IB) un groupe aromatique contenant de 6 à 10 atomes de carbone, qui comprend

(A) l'utilisation d'un système de réacteur à recyclage permettant l'opération sur un mode continu avec mélange intense et à contre-courant, comportant une zone de réaction adaptée à la polymérisation anionique du styrène à une température de 70 à 120°C et capable de maintenir une masse réactionnelle en mélange intime et en mouvement omnidirectionnel entre les extrémités supérieure et inférieure de la zone de réaction;

(B) l'utilisation d'une quantité efficace d'un catalyseur anionique organométallique soluble dans le styrène pour l'amorçage de la copolymérisation;

(C) l'introduction dans la zone de réaction d'un mélange de composants monomères de formules (IA) et (IB) en un rapport pondéral allant de 0,1 à 2,0, ledit mélange de monomères étant introduit sous forme d'une solution dans un solvant du mélange de monomères avec un rapport mélange de monomères:solvant allant respectivement, en parties en poids, de 1:8 à 8:1;

(D) le maintien de la masse réactionnelle dans la zone de réaction dans un état généralement homogène;

(E) le maintien, dans la masse réactionnelle dans la zone de réaction, de la concentration du monomère de formule IB n'a pas réagi à une valeur ne dépassant pas 10% en poids du monomère de formule IB ajouté à ladite masse;

(F) le maintien de la concentration du copolymère achevé dans la masse réactionnelle dans la zone de réaction à une valeur allant de 30 à 70% en poids; et

(G) le soutirage d'une solution du produit copolymère en tant qu'effluent sortant du réacteur, et la récupération d'un produit copolymère homogène stable à la chaleur.

2. Procédé selon la revendication 1, dans lequel on introduit dans le réacteur le mélange de monomères pour obtenir un produit polymère contenant de 10 à 40% en poids d'au moins un monomère de formule IA copolymérisé dans celui-ci.

3. Procédé selon la revendication 1, dans lequel le monomère de formule IA est l'α-méthylstyrène.

4. Procédé selon la revendication 1, dans lequel le monomère de formule IB est le styrène.

5. Procédé selon la revendication 1, dans lequel le monomère de formule IB est le p-isopropényl-toluène.

6. Procédé selon la revendication 1, dans lequel les monomères sont l'α-méthylstyrène et le styrène.

7. Procédé selon la revendication 1, dans lequel l'amorceur est le n-butyllithium.

8. Procédé selon la revendication 6, dans lequel on utilise comme solvant l'éthylbenzène.

9. Procédé selon la revendication 6, dans lequel on utilise comme solvant le xylène, le mésitylène, ou des mélanges de ceux-ci.

10. Procédé selon la revendication 1, dans lequel on utilise comme solvant un excès du monomère de formule IA.

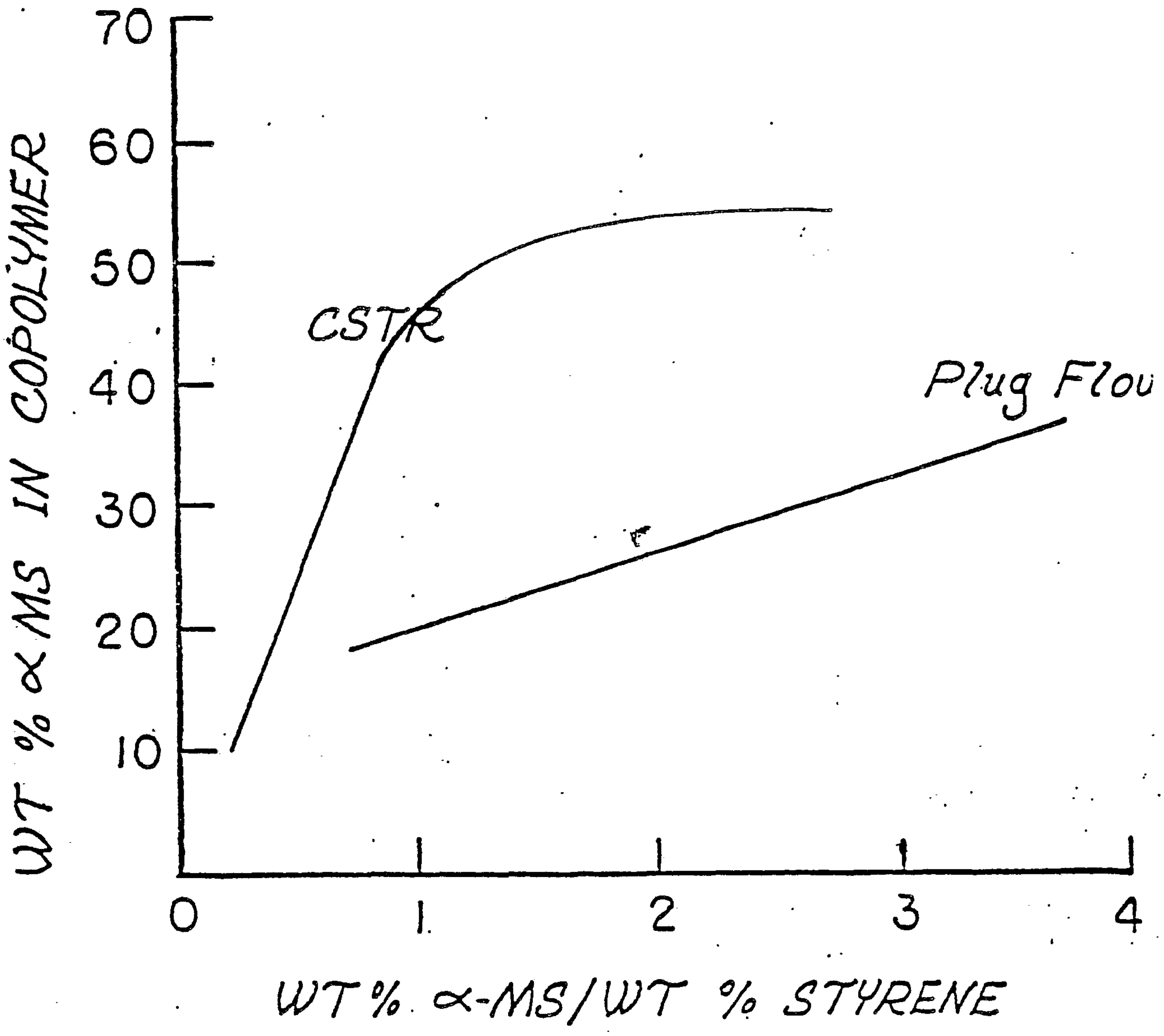
70
60
50
40
30
20
10
0
1
2
3
4
WT % α MS IN COPOLYMER
WT % α-MS/WT % STYRENE
CSTR
Plug Flou

Fig. 1

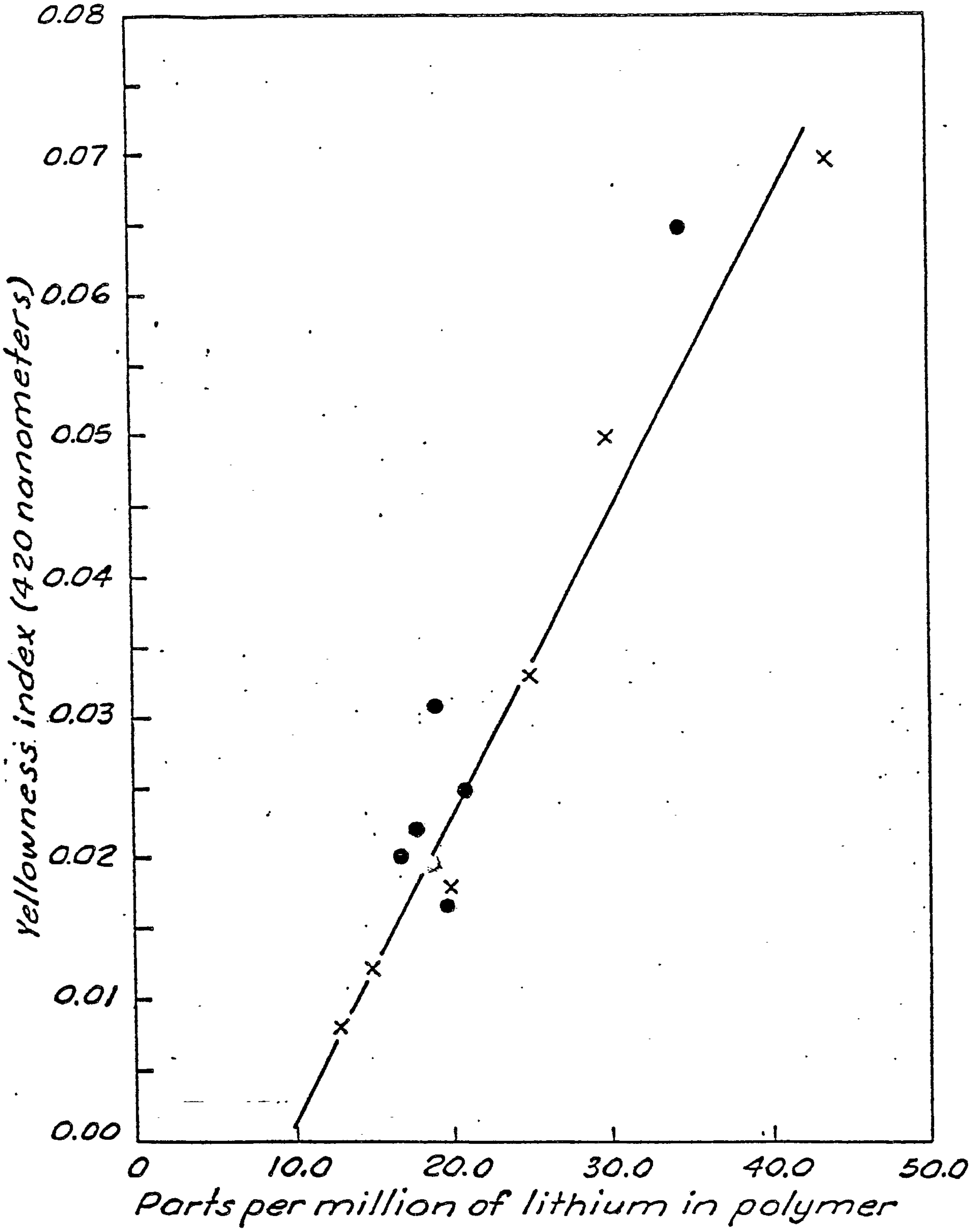
0.08
0.07
0.06
0.05
0.04
0.03
0.02
0.01
0.00
Yellowness index (420 nanometers)
0
10.0
20.0
30.0
40.0
50.0
Parts per million of lithium in polymer

Fig. 2